# EUROPEAN PATENT SPECIFICATION

(11) **EP 1 682 373 B1**
(45) Date of publication and mention of the grant of the patent: **08.10.2008**
(21) Application number: 04791334.8
(22) Date of filing: 28.10.2004
(51) Int. Cl.: B60K 15/03, B60K 15/04

(54) **FUEL SYSTEM FOR AN INTERNAL COMBUSTION ENGINE**
KRAFTSTOFFANLAGE FÜR EINEN VERBRENNUNGSMOTOR
SYSTEME D'ALIMENTATION D'UN MOTEUR A COMBUSTION INTERNE

(30) Priority: 07.11.2003 FR 0313073; 29.01.2004 FR 0400856
(43) Date of publication of application: 26.07.2006
(73) Proprietor: Inergy Automotive Systems Research (SA), 1120 Bruxelles (BE)
(72) Inventor: CAMPENON, Thierry, F-53000 LAVAL (FR); KUNSTMANN, Olivier, F-53210 ARGENTRE (FR)
(74) Representative: Jacques, Philippe
(86) International application number: PCT/EP2004/052706
(87) International publication number: WO 2005/044611

(56) References cited:
- DE-A- 10 112 353
- FR-A- 2 834 006
- US-A- 4 370 998
- US-A1- 2003 150 507

## Description

The invention relates to the supply of internal combustion engines with liquid fuels.

It relates more especially to a fuel system intended for such engines, it being possible for this fuel system to be for engines supplied with volatile liquid fuels as well as for engines supplied with heavy liquid fuels such as those sometimes called, according to the countries and regions, by the terms diesel or road vehicle gasoil or gazole. The invention also relates to a method for producing such a system.

A desire to increase the protection of the environment has led national and international authorities of many regions of the world to reinforce regulatory constraints as regards the emission of pollutants in many fields, in particular in the field of motor vehicle transport. Accordingly, motor vehicle manufacturers have undertaken research with a view to reducing emissions of particulates (particularly for diesel engines) and certain pollutant gases (NOx, CO etc). These research projects have notably resulted in the addition of certain additives (such as some metal salts, urea, ammonia, carbamates etc) to the fuel, to the engine, to exhaust gases etc.

In the case of vehicles propelled by a diesel engine, motor vehicle manufacturers have provided a solution to the problem of the emission of particulates by equipping these vehicles with particulate filters positioned in the exhaust system taking combustion gases to the atmosphere. In order to regenerate the filtering ability of these particulate filters, it is necessary, at regular intervals, to burn off the particulates partially blocking the filters. In order to be able to automate the periodic cycle for regenerating particulate filters, it has been necessary to find means for reducing the combustion temperature of these particulates so that it is compatible with the highest temperatures that can be obtained in exhaust gases, by means of suitable temporary regulation of the combustion parameters of the engine itself. The use of a certain quantity of chemical combustion additive has been recognized as necessary so that the combustion temperature of solid particulates in exhaust gases can be reduced to a temperature level that is compatible with combustion in the engine and the total elimination of particulates. Liquid additive reservoirs, having a small volume in comparison with that of the fuel reservoir, have been designed for mounting on, in or close to the fuel reservoir of diesel motor vehicles.

Accordingly, patent application DE 10112361 discloses a fuel reservoir in the form of a saddle including within it an additive reservoir that is situated close to the pump serving to balance the fuel level in different parts of the reservoir. Such a system is compact but has the disadvantage that the reservoir for the additives has to be produced separately and then fixed inside the fuel reservoir. Moreover, such a system is limited to additives that have to be metered into the fuel reservoir itself.

On account of this, the object of the invention is to provide a compact but all-purpose fuel system that is equally suited to the production of supply systems for engines operating with light, volatile hydrocarbons and to the manufacture of supply systems for engines operating with heavy hydrocarbons, and which makes it possible to meter an additive not only into the fuel reservoir itself but also into any other part of the fuel system, the engine or the exhaust system, etc.

Consequently, the invention relates to a fuel system for an internal combustion engine operating with a liquid fuel and comprising a fuel reservoir intended for the said fuel as well as an additive reservoir comprising a chamber that is formed in a concave recess of the wall of the fuel reservoir.

In the present statement, the fuel system is an assembly of compartments that are intended to be incorporated in a motor vehicle or a stationary power installation and that have the main function of storing, purifying, measuring or transporting a fuel intended for supplying a heat engine. The automotive vehicle can be a motor vehicle (car, lorry, motorcycle, river boat, sea-going vessel or an aeroplane, for example) or a vehicle dedicated to a track (for example a railway locomotive). The stationary power installation can for example comprise the motor of an electricity-generating unit or a machine-tool motor.

A fuel is understood to denote a hydrocarbon that is suitable for supplying internal combustion engines.

The expression "liquid hydrocarbon" denotes a hydrocarbon that, under normal conditions of use for the engine, exists in a liquid state in the fuel reservoir of the fuel system.

The expression "volatile liquid hydrocarbon" denotes a liquid hydrocarbon (according to the definition stated above) that has a saturated vapour pressure greater than 1 bar at 293 K (20°C). Volatile liquid hydrocarbons commonly used for supplying heat engines of motor vehicles are those sold commercially under the name "petrol" and intended for so-called "explosion" spark-ignition heat engines.

The expression "heavy liquid hydrocarbon" denotes a liquid hydrocarbon that has a saturated vapour pressure below 1 bar at 293 K (20°C). Heavy liquid hydrocarbons commonly used for supplying heat engines of motor vehicles are those sold commercially under the names "gasoil" or "gazole" and intended for compression-ignition heat engines operating with the diesel cycle.

According to the invention, the additive reservoir is produced in one piece with the fuel reservoir and the assembly is denoted by the general term "reservoir" in the following paragraphs. This reservoir can be made of any material compatible with each of the liquid hydrocarbons that it is likely to contain. This material must be chemically inert at the same time to volatile liquid hydrocarbons and to heavy liquid hydrocarbons at normal pressures and temperatures of use. It is made of plastic. Plastics give good results within the context of the invention.

The reservoir can be manufactured by any suitable means. According to the invention, the reservoir is manufactured by a moulding operation. The material of the reservoir must be chosen from those permitting manufacture by moulding. Thermoplastic materials are well suited to this end. A thermoplastic material denotes any thermoplastic polymer, including thermoplastic elastomers, as well as their mixtures. The term "polymer" denotes homopolymers as well as copolymers (in particular binary or tertiary). Examples of such copolymers are, in a non-limiting manner: random distribution copolymers, sequenced copolymers, block copolymers and grafted copolymers. Any type of thermoplastic polymer or copolymer is suitable of which the melting point is below the decomposition temperature. Synthetic thermoplastic materials that have a melting range extending over at least ten degrees Celsius are particularly well suited. As an example of such materials, there exist those that have a polydispersion of their molecular mass. In particular, use can be made of polyolefins, vinyl polyhalides, thermoplastic polyesters, polyketones, polyamides and copolymers thereof. A mixture of polymers or copolymers can also be used, as well as a mixture of polymeric materials with inorganic, organic and/or natural fillers such as, for example, but not in a limiting way: carbon, inorganic salts or other derivatives, natural fibres, glass fibres and polymeric fibres. It is also possible to use multi-layer structures consisting of stacked integral layers comprising at least one of the polymers or copolymers described above. Vinyl polyhalides and polyolefins are generally preferred. A polymer that is often employed is polyethylene. Excellent results have been obtained with high-density polyethylene (HDPE).

The reservoir of the system according to the invention is generally connected to a filling tube intended for the introduction of liquid fuel into the fuel reservoir. This tube can be manufactured separately and then added to the reservoir to which it is attached by any suitable means, for example by welding or gluing. Preferably, according to the invention, the filling tube is moulded in one piece with the reservoir.

According to the invention, the reservoir includes a recess in its wall, this recess being concave on its face directed towards the outside of the reservoir. The shape of the recess is not critical for defining the invention. It can equally well have a curved shape (for example the shape of a portion of a sphere or an ovoid shape), a conical or frustoconical shape or a polyhedral shape. It is preferred to give it a curved shape, this being regular or irregular.

According to the invention, a chamber is formed in this concave recess that forms an integral part of the additive reservoir. This chamber is advantageously provided with a metering system that preferably comprises an injector that is connected to an injection pump and that emerges at the place provided for dosing the additive (reservoir, engine, exhaust etc). The injector and the injection pump can each be located inside the recess or outside this. The metering system preferably includes a syringe pump such as described in application FR 0320880.8 in the name of the Applicant.

When the additive is intended to be added to the fuel, the chamber of the additive reservoir communicates with the fuel reservoir by means of an opening provided through it. In this case, the chamber preferably includes a system for metering the additive from the chamber into the reservoir, via the aforementioned opening, the said metering system advantageously comprising a pump and an injector passing through the aforementioned opening.

In the case where the metering system has the function of distributing the additive into the fuel reservoir, it does this for example in a quantity that is a mathematical function (normally, but not necessarily, a proportional function) of the instantaneous consumption of fuel by the engine. This quantity is generally calculated by an on-board computer or a specific calculator. Alternatively, metering can be carried out once, just after filling, according to the quantity of fuel introduced during filling. In this case, the computer or calculator is advantageously connected to a device for detecting the opening and closing of the fuel filling system. Such a device can comprise an electromagnet which is connected to a moveable component (a stopper strictly speaking or any other manual or automatic closing system) and which changes polarity between its open and closed position. This difference of the polarity state is detected by the on-board computer which memorizes the contents of the reservoir at the moment it is informed of this. If the position of the stopper when closed corresponds to a rest situation for the computer, it is able to calculate a difference of fuel volume introduced between the moment when the system is activated and the moment when it becomes stable again. This volume serves as a basis for calculating metering (performed after closing the stopper) necessary to maintain a constant additive concentration.

More generally, the aforementioned chamber is intended to serve as a reservoir with any additive, preferably a pasty or liquid additive, that can be intended to be added directly to the fuel as previously stated, but can also be intended to be introduced into the engine or the exhaust gases, etc. In the case where the system according to the invention is intended for a diesel engine, it advantageously comprises a composition, dissolved in a hydrocarbon solvent, of a catalyst for the low-temperature combustion of carbonaceous solid particulates produced by the incomplete combustion of the heavy hydrocarbon in a compression-ignition engine. Examples of liquid additives that are suitable for this variant are iron and cerium salts in a hydrocarbon solution.

The chamber of the additive reservoir is advantageously closed by a lid of any shape. Generally, the latter consists of a plate intended to be fixed to the periphery of the recess. The material of which the lid is made it not critical for the definition of the invention. In practice, the lid should be made of a material that enables it to withstand the chemical and mechanical stresses to which fuel systems of internal combustion engines are normally subjected during normal use. It can for example be made of metal or of a synthetic resin. In the case of a synthetic resin, this is advantageously the same as that of the fuel reservoir. In a variant, a device for metering the additive (injection pump for example) is fixed to this lid and is connected to at least one electric conductor that passes through the lid in a leakproof manner. The object of this conductor is to supply the device with electricity. If it is a multi-channel conductor, it can optionally also connect the metering device to an engine management calculator or any other control component. The lid must be hermetically sealed to the chamber. This can be achieved by any suitable means and can be of the removable or non-removable type. Means of attachment that can be used in the system according to the invention comprise welding, gluing and crimping. As a variant, the lid is a circular lid that is screwed onto a threaded circular zone of the periphery of the recess.

The system according to the invention also preferably includes a filling device for introducing the additive into the chamber. This filling device can comprise a filling tube that can either communicate with, or emerge in, the filling tube of the fuel reservoir, or can be independent of this. According to an advantageous embodiment of the present invention, the filling tube of the fuel reservoir and the filling tube of the additive reservoir are in communication, the filling tube of the additive reservoir emerging into the filling tube of the fuel reservoir.

The system according to the invention also advantageously includes a tube for degassing the additive reservoir that also preferably ends in the filling tube of the main fuel reservoir, beside an orifice for guiding a nozzle for dispensing fuel. A stopper that is common to the ends of the filling and degassing tubes advantageously enables these tubes to be closed in a more or less leakproof manner, apart from periods when this additive reservoir is being filled.

In this advantageous form of the additive system according to the invention, the tube for degassing the additive reservoir can be provided, at its upper part, with means for visually indicating an overflow state to an operator, at the end of the process of topping up the additive through the filling tube. These means can consist, for example, of a float placed in the degassing pipe that rises to the upper orifice of this pipe as soon as the reservoir is filled with additive and threatens to overflow through this pipe.

Finally, the degassing tube according to this variant of the invention is preferably provided with an excess pressure and a reduced pressure safety system. The aim of this system is in particular to be able to remove air present in the additive reservoir during filling (excess pressure safety) and to replace the volume of additive, progressively consumed, by air during the operation of the vehicle (reduced pressure safety). Advantageously, this system includes a valve that only opens beyond a given pressure threshold (for example above 120 mbar), this being to prevent leakages of additive and unwanted ingress of liquid, dust etc.

The invention also relates to a method for manufacturing a fuel system as previously described, wherein:
- a reservoir for the said fuel is manufactured, of which the wall has a recess that is concave on its outer face;
- a lid is manufactured;
- the said lid is hermetically attached to a peripheral edge of the aforementioned concave recess, so as to form a chamber;
- an additive is introduced into the chamber before or after the lid is attached; and
- the chamber is connected to a system for metering the additive before or after the additive is introduced into the chamber.

In this method, the terms used have the same significance as those employed above for describing the fuel system. Preferably, the reservoir and the lid are made of plastic, such as previously described, and, in a particularly preferred manner, of thermoplastic, which enables them to be manufactured by moulding. Any type of suitable moulding can be employed. Moulding by blow-extrusion and moulding by blow-injection are especially recommended for the manufacture of the reservoir and, in particular, moulding by blow-extrusion. As regards the lid, it is preferably injection-moulded.

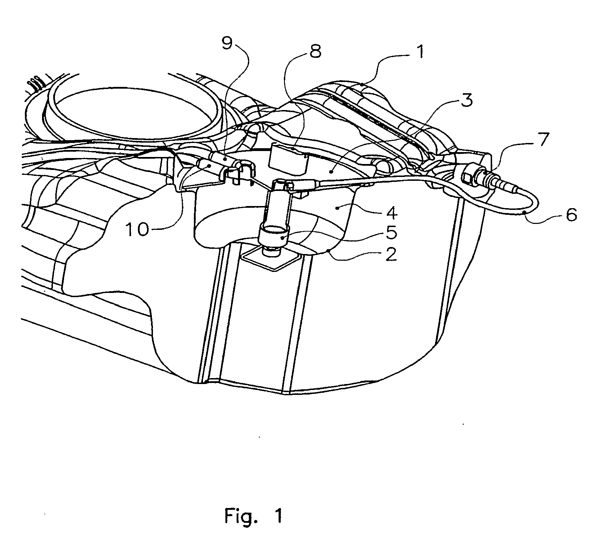

Special features and details of the invention will become apparent from the following description of the accompanying figure.

This figure (not shown to scale) shows, in cross section, a fuel system for an internal combustion engine operating with a heavy hydrocarbon, for example gasoil or diesel.

The fuel system shown in this figure is specifically intended for a vehicle fitted with an internal combustion engine of the compression-ignition type (sometimes called "diesel engine"). This fuel system comprises a fuel reservoir made of polyethylene, of which the wall 1 has a recess 2 covered by a plate 3 delimiting a chamber 4. The chamber 4 serves as a reservoir for a liquid additive for the heavy hydrocarbon, the said additive comprising a catalyst for the combustion of carbonaceous particulates or dust that are produced during the combustion of the heavy hydrocarbon in the engine chambers. The chamber 4 is connected to the reservoir by a metering system comprising an electric injection pump 5 that is attached to the plate 3 and immersed in the liquid additive (not shown). A pipe 6 connects the pump 5, through the plate 3, to an injector 7 that penetrates into the wall of the reservoir 1 through an opening (not shown). The pump 5 is supplied with electricity by means of an electric conductor 8 passing through the plate 3 in a leakproof manner. A pipe 9 emerging in an opening (not shown) of the plate 3 acts as a tube for filling the chamber 4 with additive. A second pipe 10 acts as a tube for degassing the additive reservoir when the latter is being filled. These two tubes are normally closed when the internal combustion engine is operating.

## Claims

1. Fuel system for an internal combustion engine operating with a liquid fuel and comprising a fuel reservoir intended for the said fuel as well as an additive reservoir, **characterized in that** the additive reservoir is molded in one piece with the fuel reservoir and comprises a chamber (4) that is formed in a concave recess (2) of a wall (1) of the fuel reservoir.

2. Fuel system according to Claim 1, **characterized in that** the additive is intended to be added to the fuel and **in that** the chamber (4) communicates with the fuel reservoir by means of an opening provided through it.

3. Fuel system according to Claim 2, **characterized in that** the chamber (4) includes a system for metering the additive from the chamber into the reservoir, via the aforementioned opening, the said metering system comprising a pump (5) and an injector (7) passing through the aforementioned opening.

4. Fuel system according to Claim 2 or 3, **characterized in that** the additive is added to the fuel just after the fuel reservoir has been filled, in a quantity calculated by an on-board computer or a calculator connected to a device enabling the opening and closing of the fuel reservoir to be detected and **in that** the computer/calculator is capable of calculating the volume of fuel introduced during filling and of consequently metering the additive.

5. Fuel system according to any one of Claims 2 to 4, **characterized in that:**
■ the fuel is diesel and the engine is a compression-ignition engine; and
■ the additive comprises a composition, dissolved in a hydrocarbon solvent, of a catalyst for the low-temperature combustion of carbonaceous solid particulates produced by the incomplete combustion of diesel in the engine.

6. Fuel system according to any one of the preceding claims, **characterized in that** the chamber (4) is closed by a lid (3) made of the same material as that of the fuel reservoir.

7. Fuel system according to any one of the preceding claims, **characterized in that** it includes a tube (9) for filling the additive reservoir emerging in the tube for filling the fuel reservoir.

8. Fuel system according to any one of the preceding claims, **characterized in that** it includes a tube (40) for degassing the additive reservoir emerging in the tube for filling the fuel reservoir.

9. Method for manufacturing a fuel system according to any one of the preceding claims, wherein:
■ a reservoir for the said fuel is manufactured, of which a wall (1) has a recess (2) that is concave on its outer face;
■ a lid (3) is manufactured;
■ the said lid is hermetically attached to a peripheral edge of the aforementioned concave recess (2), so as to form a chamber (4);
■ an additive is introduced into the chamber before or after the lid (3) is attached; and
■ the chamber (4) is connected to a system for metering the additive before or after the additive is introduced into the chamber.

10. Method according to the preceding claim, **characterized in that** the reservoir and the lid (3) are made of a thermoplastic material and **in that** the reservoir is manufactured by blow-extrusion and the lid by injection.

## Patentansprüche

1. Kraftstoffanlage für einen Verbrennungsmotor, der mit einem flüssigen Kraftstoff betrieben wird, die einen Kraftstoffbehälter, der für den Kraftstoff bestimmt ist, sowie einen Additivbehälter umfasst, **dadurch gekennzeichnet, dass** der Additivbehälter einstückig mit dem Kraftstoffbehälter geformt ist und eine Kammer (4) umfasst, die in einer konkaven Aussparung (2) einer Wand (1) des Kraftstoffbehälters ausgebildet ist.

2. Kraftstoffanlage nach Anspruch 1, **dadurch gekennzeichnet, dass** das Additiv dem Kraftstoff zugesetzt werden soll und dass die Kammer (4) mit dem Kraftstoffbehälter über eine dadurch vorgesehene Öffnung verbunden ist.

3. Kraftstoffanlage nach Anspruch 2, **dadurch gekennzeichnet, dass** die Kammer (4) ein System zur Dosierung des Additivs von der Kammer in den Behälter über die oben erwähnte Öffnung enthält, wobei das Dosiersystem eine Pumpe (5) und einen durch die oben erwähnte Öffnung passierenden Injektor (7) umfasst.

4. Kraftstoffanlage nach Anspruch 2 oder 3, **dadurch gekennzeichnet, dass** das Additiv dem Kraftstoff kurz nach dem Füllen des Kraftstoffbehälters in einer Menge zugesetzt wird, die von einem Bord-Computer oder von einem mit einer Vorrichtung, mit der das Öffnen und Schließen des Kraftstoffbehälters erfasst werden kann, verbundenen Rechner berechnet wird, und dass der Computer/Rechner das Volumen des während des Füllens eingeleiteten Kraftstoffs berechnen und das Additiv dementsprechend dosieren kann.

5. Kraftstoffanlage nach einem der Ansprüche 2 bis 4, **dadurch gekennzeichnet, dass**
- der Kraftstoff Diesel ist und der Motor ein Motor mit Eigenzündung ist; und
- das Additiv eine in einem Kohlenwasserstofflösungsmittel aufgelöste Zusammensetzung eines Katalysators zur Niedrigtemperaturverbrennung von durch die unvollständige Verbrennung von Diesel im Motor erzeugten kohlenstoffhaltigen festen Partikeln umfasst.

6. Kraftstoffanlage nach einem der vorhergehenden Ansprüche, **dadurch gekennzeichnet, dass** die Kammer (4) durch einen aus dem gleichen Material wie das des Kraftstoffbehälters hergestellten Deckel (3) verschlossen ist.

7. Kraftstoffanlage nach einem der vorhergehenden Ansprüche, **dadurch gekennzeichnet, dass** sie einen Stutzen (9) zum Füllen des Additivbehälters enthält, der in dem Stutzen zum Füllen des Kraftstoffbehälters mündet.

8. Kraftstoffanlage nach einem der vorhergehenden Ansprüche, **dadurch gekennzeichnet, dass** sie einen Stutzen (10) zum Entgasen des Additivbehälters enthält, der in dem Stutzen zum Füllen des Kraftstoffbehälters mündet.

9. Verfahren zur Herstellung einer Kraftstoffanlage nach einem der vorhergehenden Ansprüche, wobei:
- ein Behälter für den Kraftstoff hergestellt wird, von dem eine Wand (1) eine an ihrer Außenfläche konkave Aussparung (2) aufweist;
- ein Deckel (3) hergestellt wird;
- der Deckel hermetisch an einem Umfangsrand der oben erwähnten konkaven Aussparung (2) befestigt wird, um eine Kammer (4) zu bilden,
- ein Additiv in die Kammer eingeleitet wird, bevor oder nachdem der Deckel (3) befestigt wird; und
- die Kammer (4) mit einem System zur Dosierung des Additivs vor oder nach Einleiten des Additivs in die Kammer verbunden wird.

10. Verfahren nach einem der vorhergehenden Ansprüche, **dadurch gekennzeichnet, dass** der Behälter und der Deckel (3) aus einem thermoplastischen Material hergestellt werden und dass der Behälter durch Extrusionsblasen und der Deckel durch Spritzen hergestellt werden.

## Revendications

1. Système d'alimentation d'un moteur à combustion interne fonctionnant avec un carburant liquide et comprenant un réservoir de carburant pour ledit carburant ainsi qu'un réservoir d'additif, **caractérisé en ce que** le réservoir d'additif est moulé d'une seule pièce avec le réservoir de carburant et comprend une chambre (4) formée dans un retrait concave (2) d'une paroi (1) du réservoir de carburant.

2. Système d'alimentation selon la revendication 1, **caractérisé en ce que** l'additif est destiné à être ajouté au carburant et **en ce que** la chambre (4) communique avec le réservoir de carburant au moyen d'une ouverture pratiquée à travers elle.

3. Système d'alimentation selon la revendication 2, **caractérisé en ce que** la chambre (4) comporte un système pour doser l'additif allant de la chambre dans le réservoir, par le biais de l'ouverture susmentionnée, ledit système de dosage comprenant une pompe (5) et un injecteur (7) passant à travers l'ouverture susmentionnée.

4. Système d'alimentation selon la revendication 2 ou 3, **caractérisé en ce que** l'additif est ajouté au carburant juste après que le réservoir de carburant a été rempli, en une quantité calculée par un ordinateur ou un calculateur embarqué connecté à un dispositif permettant de détecter l'ouverture et la fermeture du réservoir de carburant, et **en ce que** l'ordinateur/calculateur est capable de calculer le volume de carburant introduit au cours du remplissage et par conséquent de doser l'additif.

5. Système d'alimentation selon l'une quelconque des revendications 2 à 4, **caractérisé en ce que :**
- le carburant est du diesel et le moteur est un moteur à allumage par compression; et
- l'additif comprend une composition, dissoute dans un solvant hydrocarboné, d'un catalyseur pour la combustion à basse température de particules solides carbonées produites par la combustion incomplète de diesel dans le moteur.

6. Système d'alimentation selon l'une quelconque des revendications précédentes, **caractérisé en ce que** la chambre (4) est fermée par un couvercle (3) fabriqué en le même matériau que celui du réservoir de carburant.

7. Système d'alimentation selon l'une quelconque des revendications précédentes, **caractérisé en ce qu'**il comporte un tube (9) pour remplir le réservoir d'additif et émergeant dans le tube pour remplir le réservoir de carburant.

8. Système d'alimentation selon l'une quelconque des revendications précédentes, **caractérisé en ce qu'**il comporte un tube (10) pour dégazer le réservoir d'additif et émergeant dans le tube pour remplir le réservoir de carburant.

9. Procédé pour fabriquer un système d'alimentation selon l'une quelconque des revendications précédentes, dans lequel :
- on fabrique un réservoir pour ledit carburant, dont une paroi (1) a un retrait (2) qui est concave sur sa face externe ;
- on fabrique un couvercle (3) ;
- ledit couvercle est attaché hermétiquement à un bord périphérique du retrait concave (2) susmentionné de manière à former une chambre (4) ;
- un additif est introduit dans la chambre avant ou après que l'on a attaché le couvercle (3) ; et
- la chambre (4) est connectée à un système pour doser l'additif avant ou après que l'additif a été introduit dans la chambre.

10. Procédé selon la revendication précédente, **caractérisé en ce que** le réservoir et le couvercle (3) sont fabriqués en un matériau thermoplastique et **en ce que** le réservoir est fabriqué par moulage par extrusion-soufflage et le couvercle par injection.
